## Europäisches Patentamt

## European Patent Office

## Office européen des brevets

(19)

(11) Numéro de publication: **0 035 417**
**B1**

(12)

# FASCICULE DE BREVET EUROPEEN

(45) Date de publication du fascicule du brevet:
**09.05.84**

(21) Numéro de dépôt: **81400145.9**

(22) Date de dépôt: **30.01.81**

(51) Int. Cl.³: **C 09 K 3/10, C 04 B 25/04,**
**C 04 B 43/10, C 09 D 5/34**

(54) **Produit et procédés pour réaliser des joints ignifugés et moyen de mise en oeuvre d'un de ces procédés.**

(30) Priorité: **08.02.80 FR 8002770**

(43) Date de publication de la demande:
**09.09.81 Bulletin 81/36**

(45) Mention de la délivrance du brevet:
**09.05.84 Bulletin 84/19**

(84) Etats contractants désignés:
**AT BE CH DE GB IT LI LU NL SE**

(56) Documents cités:
**DE - A - 2 461 894**
**DE - A - 2 621 115**
**FR - A - 1 569 155**

(73) Titulaire: **ISOLATION THERMIQUE DU NORD - I.T.N.**
**SOCIETE A RESPONSABILITE LIMITEE, 32, rue du**
**Magasin Général, F-59000 Dunkerque (FR)**

(72) Inventeur: **Amedro, Albert Charles, 80, rue Neuve,**
**F-62000 Calais (FR)**
Inventeur: **Senach, Gérald Georges, 140 Route de la**
**Reine, F-62000 Boulogne sur Mer (FR)**
Inventeur: **Delcombel, Pierre Jack Jean-Marie, 3, Place**
**de la Petite Chapelle, F-59000 Dunkerque (FR)**

(74) Mandataire: **Vander-Heym, Roger, 172 Boulevard**
**Voltaire, F-75011 Paris (FR)**

## Description

La présente invention est relative à un produit permettant de réaliser des joints ignifugés.

On sait que, dans les centrales nucléaires par exemple, les murs et les planchers souvent très épais sont traversés par des tubes ou par des faisceaux de tubes généralement parcourus par un fluide à haute température. Dans le premier cas, le tube traverse le mur par un fourreau et, dans le second cas, le faisceau traverse le mur par une large ouverture; dans les deux cas un espace subsiste autour des tubes et il convient de l'obturer à l'aide d'un produit permettant de réaliser un joint possédant les qualités ci-dessous:

— il doit être totalement étanche à l'eau et aux gaz;

— il doit permettre aux tubes de se dilater;

— il doit résister aux rayonnements radioactifs;

— il doit avoir une bonne résistance au feu;

— il doit conserver longtemps les qualités ci-dessus.

En l'état actuel de la technique, on utilise un produit à base de mousse de silicone. Ce produit est très onéreux et présente deux inconvénients majeurs, dont l'un réside dans sa mise en œuvre et l'autre dans sa tenue au feu.

Pour mettre en œuvre ce produit qui est initialement liquide, il est nécessaire de coffrer le joint, c'est-à-dire d'obturer, pratiquement de façon étanche, les deux extrémités pour pouvoir ensuite injecter le produit.

L'obturation est réalisée à l'aide de plaques en fibre céramique traversées par les tubes.

Ce procédé est donc coûteux en raison de l'utilisation des plaques et d'une main-d'œuvre appropriée, en vue de la mise en place et du retrait desdites plaques.

Par ailleurs, lorsqu'il s'agit de réaliser un joint au droit du passage d'un tube dans un fourreau, les plaques ci-dessus ne sont pas utilisables et on doit obturer manuellement les extrémités du joint à l'aide de fibres céramiques avec tous les inconvénients que cela comporte.

En ce qui concerne la tenue au feu, il a été constaté que le produit résiste dans de bonnes conditions à l'action d'une flamme, mais que, une fois qu'il commence sa combustion, celle-ci est relativement rapide et que, lorsque l'action de la flamme cesse, la combustion du produit se poursuit pendant un temps relativement long.

Actuellement, les caoutchoucs synthétiques ne peuvent pas être très utilisés pour réaliser des joints ignifugés, car ils vieillissent rapidement s'ils sont soumis à des rayonnements. De ce fait, les produits actuels tels que ceux décrits dans le brevet DE-A N° 2621115 ne peuvent pas être utilisés pour l'étanchéité des joints dans les centrales nucléaires.

La présente invention, qui remédie à ces inconvénients, est remarquable en ce que le produit utilisé pour réaliser le joint est obtenu par l'association de produits qui pris séparément présentent des caractéristiques qui les rendent impropres à un tel usage.

En effet, on mélange dans des proportions déterminées du mica expansé connu sous le nom de vermiculite et un liant tel qu'un caoutchouc synthétique.

Le mica expansé qui se présente sous forme de grains de 2 à 5 mm de diamètre est connu pour sa résistance au feu, mais il est fragile, rigide et impropre à assurer une étanchéité quelconque.

Le caoutchouc synthétique résiste mal au feu mais, par contre, il est élastiquement déformable et est naturellement étanche.

En mélangeant le mica expansé et le caoutchouc synthétique, on obtient un produit qui possède les qualités de ses constituants sans en présenter les inconvénients.

Dans le produit obtenu, le caoutchouc synthétique se présente sous la forme d'une pellicule enrobant chaque grain de mica expansé et l'expérience a montré que le temps nécessaire pour démarrer la combustion du caoutchouc est bien supérieure à celui usuel lorsque le caoutchouc est soumis à l'action de la même flamme.

Selon une autre caractéristique de l'invention, on incorpore au mélange un produit ignifuge susceptible, lorsqu'il est porté à haute température, de dégager des gaz incombustibles qui forment un écran entre le caoutchouc synthétique et l'oxygène de l'air, provoquant ainsi une rapide extinction de la combustion.

Pour des raisons de mise en œuvre, on utilisera de préférence comme liant une émulsion aqueuse d'un haut polymère synthétique et, comme ignifuge, un sel également émulsifiable dans l'eau.

On va maintenant décrire, à titre d'exemple, un produit conforme à l'invention.

Ce produit est obtenu par le mélange de mica expansé, d'une émulsion aqueuse d'un haut polymère styrène/butadiène et d'un sel tel que le phosphate d'ammonium.

Les trois composants sont mélangés selon les proportions pondérales ci-dessous (%):

| — mica expansé | 15 à | 40 |
|---|---|---|
| — sel | 15 à | 40 |
| — liant | 70 à | 20 |
| | 100 | 100 |

L'expérience a montré que les proportions ci-dessous donnaient les meilleurs résultats (%):

| — mica expansé | 22 |
|---|---|
| — sel | 22 |
| — liant | 56 |

Il y a lieu de noter que le phosphate d'ammonium ne réagit pas sur le styrène/butadiène, ni physiquement ni chimiquement.

La fig. 1 est une vue en coupe verticale d'un mur traversé par un faisceau de tubes.

La fig. 2 est une vue analogue d'un mur traversé par un tube sous fourreau.

La fig. 3 est une vue en perspective de l'extrémité d'un organe d'injection.

Le produit de l'invention peut être mis en œuvre de deux façons: soit par projection, soit par injection.

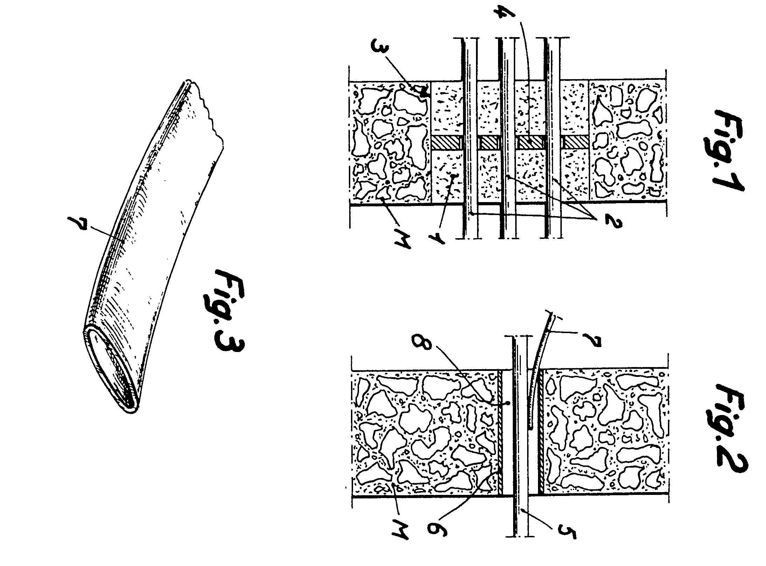

Le procédé par projection (fig. 1) est utilisé pour réaliser un joint 1 au passage d'un faisceau de tubes 2. Dans ce cas, on dispose dans l'ouverture 3, sensiblement dans le plan médian du mur M, une plaque 4 traversée très librement par les tubes du faisceau, ladite plaque formant un écran, permettant l'accrochage du produit. Il importe peu qu'une certaine quantité de produit traverse la plaque par les orifices de passage des tubes, puisque l'autre face de la plaque est située à l'intérieur du joint à réaliser. La projection se fait de préférence sur les deux faces de la plaque 4.

Pour projeter le produit, on utilise une lance d'un type classique comportant deux voies d'alimentation, l'une pour le mélange sec: mica plus sel, et l'autre pour le liant liquide, l'ensemble étant véhiculé et projeté par de l'air sous pression.

Le procédé par injection (fig. 2) est utilisé lorsqu'il s'agit de réaliser un joint au droit du passage d'un tube 5 traversant un fourreau 6, car il n'est pas possible de projeter le produit dans un tel espace.

Le produit, préparé à l'avance, est amené sous pression dans l'espace annulaire à l'aide d'un organe d'injection se présentant sous la forme d'un tuyau 7 souple et aplati (fig. 2 et 3). En raison de sa souplesse et de sa forme, cet organe est facilement introduit dans l'espace annulaire 8 et on le pousse jusqu'à ce que son orifice soit situé sensiblement dans le plan médian du mur M. A ce moment, on envoie le produit, et l'organe d'injection qui se gonfle à l'instar d'un tuyau d'incendie se bloque entre le fourreau 6 et le tube 5.

## Revendications

1. Produit pour réaliser des joints ignifugés comportant un liant, tel que le styrène/butadiène, un sel émulsifiable tel que le phosphate d'ammonium et une charge, caractérisé en ce que la charge est constituée par du mica expansé (ou vermiculite).

2. Produit selon la revendication 1, caractérisé en ce que le mélange s'effectue selon les proportions pondérales ci-dessous (%):

| — caoutchouc synthétique | 70 à 20 |
| — mica expansé | 15 à 40 |
| — sel | 15 à 40 |

3. Procédé de mise en œuvre d'un produit conforme, notamment, à l'une des revendications 1 ou 2 consistant à disposer une plaque sensiblement dans le plan médian du mur comportant le joint à réaliser et à projeter le produit contre l'une au moins des faces de ladite plaque.

4. Procédé de mise en œuvre d'un produit conforme, notamment, à l'une des revendications 1 ou 2, en vue de réaliser un joint dans l'espace annulaire ménagé par le passage d'un tube à travers un fourreau consistant à injecter le produit sous pression dans ledit espace, l'organe d'injection étant introduit dans ce dernier sensiblement jusqu'au plan médian de l'épaisseur du mur traversé.

5. Moyen pour la mise en œuvre du procédé conforme à la revendication 4 consistant à utiliser un organe d'injection constitué par un tube souple et aplati.

## Patentansprüche

1. Produkt zur Herstellung von unbrennbaren Dichtungen bestehend aus einem Bindemittel, wie z.B. das Butadiensystem, ein lösbares Salz, wie Ammoniumphosphat und ein Füllmittel, welches dadurch gekennzeichnet ist, dass es aus expandiertem (oder zermahlenem) Mica besteht.

2. Produkt gemäss Anspruch 1, dadurch gekennzeichnet, dass dessen Mischung nach Gewichtsanteilen erfolgt (%):

| — synthetischer Kautschuk | 70 bis 20 |
| — expandiertes Mica | 15 bis 40 |
| — Salz | 15 bis 40 |

3. Das Anwendungsverfahren eines Produktes, konform besonders einem der beiden Ansprüche 1 oder 2, besteht darin, eine Platte genau in der Mittellinie der Mauer anzubringen, an der die Dichtung hergestellt werden soll, und das Produkt zumindest auf eine der Seiten der Platte aufzutragen.

4. Das Anwendungsverfahren eines Produktes, konform besonders einem der beiden Ansprüche 1 oder 2, zur Ausführung einer Dichtung am Durchgang eines Rohres durch eine Hülse besteht darin, dass das Produkt unter Druck in den vorhandenen Zwischenraum gespritzt wird, wobei die Einspritzdüse bis zur Mittellinie der Mauer in den Zwischenraum eingeschoben wird.

5. Die Anwendung des Verfahrens konform dem Anspruch 4 besteht darin, eine Einspritzdüse zu verwenden, die aus einem flexiblen und abgeflachten Rohr besteht.

## Claims

1. Product to make flame-retarded joints including a binder, such as styrene/butadiene, an emulsifiable salt such as ammonium phosphate and a filler, characterized by the fact that the filler is constituted by expanded mica (or vermiculite).

2. Product, which according to Claim 1, is characterized by the fact that the mix is made in keeping with the following weight proportions (%):

| — synthetic rubber | 70 to 20 |
| — expanded mica | 15 to 40 |
| — salt | 15 to 40 |

3. Process for using a product conform in particular with Claim 1 or 2. It consists in placing a sheet roughly in the center plane of the wall having the joint to be made and then projecting the product against at least one of the sides of the said sheet.

4. Process for using a product conform in particular with Claim 1 or 2 so as to make a joint in the annular space created by the passage of a tube through a sheath. It consists in injecting the product under pressure into the said space, the injection instrument being introduced into the latter roughly up to the center plane of the thickness of the wall crossed through.

5. Means for using the process conform with Claim 4. It consists in using an injection instrument constituted by a flexible and flatened tube.

Fig.1

Fig.2

Fig.3